# EUROPÄISCHE PATENTSCHRIFT

(11) **EP 2 957 159 B1**
(45) Veröffentlichungstag und Bekanntmachung des Hinweises auf die Patenterteilung: **06.05.2020**
(21) Anmeldenummer: 15158643.5
(22) Anmeldetag: 11.03.2015
(51) Int. Cl.: A01B 69/04, A01B 79/00

(54) **VERFAHREN ZUR BESTIMMUNG VON SOLLFAHRSPUREN**
METHOD FOR THE DETERMINATION OF OPTIMAL DRIVING LANES
PROCÉDÉ DE DÉTERMINATION DE VOIES THÉORIQUES

(30) Priorität: 17.06.2014 DE 102014108536
(43) Veröffentlichungstag der Anmeldung: 23.12.2015
(73) Patentinhaber: CLAAS E-Systems GmbH, 49201 Dissen am Teutoburger Wald (DE)
(72) Erfinder: Meyer zu Helligen, Lars Peter, 32139 Spenge (DE); Röben, Frank, 33739 Bielefeld (DE); Sabelhaus, Dennis, 26892 Kluse (DE)
(74) Vertreter: Budach, Steffen

(56) Entgegenhaltungen:
- EP-A2- 1 602 267
- US-A1- 2014 081 568

## Beschreibung

Die Erfindung betrifft ein Verfahren zur Bestimmung von Sollfahrspuren in einem landwirtschaftlichen Feldbereich mit den Merkmalen des Oberbegriffs von Anspruch 1.

Ein derartiges Verfahren ist aus der Druckschrift US 2014/081568 A1 bekannt.

Die Bearbeitung eines landwirtschaftlichen Feldes oder eines Feldbereichs innerhalb dieses Feldes durch eine landwirtschaftliche Arbeitsmaschine bzw. durch die Arbeitsgeräte der landwirtschaftlichen Arbeitsmaschine erfolgt üblicherweise entlang von Sollfahrspuren, welche regelmäßig gerade und parallel zueinander durch den Feldbestand verlaufen. Die Sollfahrspuren enden regelmäßig an einem Vorgewende des Feldes, in welchem Vorgewende dann die Arbeitsmaschine von einer Sollfahrspur durch den Feldbestand zur nächsten abzufahrenden Sollfahrspur fährt bzw. wendet. Zusammengehörige Sollfahrspuren in dem Feld oder Feldbereich weisen entsprechend allesamt dieselbe Hauptausrichtung auf, welcher auch als Einheitsvektor in Richtung der Sollfahrspuren gedacht werden kann.

Aus dem Stand der Technik und speziell aus der WO 2009/117014 A1 ist es bekannt, basierend auf einer vorgebbaren solchen Hauptausrichtung die Sollfahrspuren sowie eine Vorgewendefläche für diese Sollfahrspuren in einem Feld automatisch zu bestimmen. Nachteilig an diesem Stand der Technik ist aber einerseits, dass gemäß dem vorgegebenen Verfahren Vorgewendeflächen nur dort definiert werden, wo die Sollfahrspuren im Wesentlichen im Lot auf eine Grenzkontur des Feldes treffen. Da aber regelmäßig auch an weiteren Stellen die Notwendigkeit eines Wendens der landwirtschaftlichen Arbeitsmaschine besteht, müssen zusätzliche Vorgewendeflächen gemäß einer subjektiven Abschätzung des Benutzers hinzugefügt werden. Hinzu kommt, dass die verfahrensgemäß definierten Vorgewendeflächen zwar das Wenden der Arbeitsmaschine von einer Sollfahrspur zu einer benachbarten Sollfahrspur erlauben, aber nicht gewährleistet ist, dass die Arbeitsmaschine in dieser Vorgewendefläche von einer beliebigen Sollfahrspur an dieser Vorgewendefläche zu einer beliebigen anderen Sollfahrspur an dieser Vorgewendefläche fahren kann.

Nachteilig ist an diesem Ansatz weiter insbesondere, dass die so ermittelten Sollfahrspuren und die Vorgewendefläche daher nicht als Grundlage für eine optimierte Routenplanung - welche speziell eine genaue Reihenfolge der abzufahrenden Sollfahrspuren, ggf. durch mehrere Arbeitsmaschinen definiert - taugt, sondern allenfalls ein sequenzielles Abfahren von nebeneinanderliegenden Sollfahrspuren erlaubt.

Ausgehend von diesem Stand der Technik besteht die Aufgabe der Erfindung also darin, das bekannte Verfahren zur Bestimmung von Sollfahrspuren in einem landwirtschaftlichen Feldbereich so weiterzuentwickeln und zu verbessern, dass es als Grundlage für eine Routenplanung auf diesen Sollfahrspuren dienen kann.

Das obige Problem wird bezogen auf ein Verfahren zur Bestimmung von Sollfahrspuren in einem landwirtschaftlichen Feldbereich gemäß dem Oberbegriff von Anspruch 1 durch die Merkmale des kennzeichnenden Teils von Anspruch 1 gelöst.

Wesentlich für die Erfindung ist die Erkenntnis, dass sowohl für die Bestimmung einer Randfläche - welche als Grundlage für die Bestimmung des Vorgewendes dient - als auch für die Bestimmung von Randstreckenzügen in dieser Randfläche Eigenschaften berücksichtigt werden können, welche auf die Arbeitsmaschine bzw. auf die jeweiligen Arbeitsgeräte der Arbeitsmaschine bezogen sind. Hierauf aufsetzend können dann Sollfahrspuren - im Feldbestand - und Vorgewendespuren - im schließlich ermittelten Vorgewende - bestimmt werden, bei denen die Befahrbarkeit bekannt ist. Das Ergebnis entspricht in seinem Aussagegehalt einer "Straßenkarte", welche somit als Grundlage für eine Routenplanung mit effektiven Optimierungsalgorithmen dienen kann, ohne dass diese Routenplanung nachgelagert noch auf die Befahrbarkeit der Sollfahrspuren und der Vorgewendespuren durch die Arbeitsmaschine überprüft werden muss.

Die bevorzugte Ausgestaltung des Unteranspruchs 2 setzt eine Randfläche an, welche das Innenfeld umläuft und nicht etwa nur an zwei gegenüberliegenden Enden des Feldbereichs angeordnet ist. Damit muss keine subjektive Vorannahme, z. B. bezüglich einer Hauptausrichtung, getroffen werden, welche dann eventuell das Auffinden von objektiv besseren Sollfahrspuren verhindert.

Der Unteranspruch 3 betrifft dabei eine bevorzugte Art der Bestimmung von Sollfahrspuren.

Die Unteransprüche 4 und 5 wiederum beschreiben bevorzugte Ansätze zum Bestimmen einer Hauptausrichtung als Basis für die Sollfahrspuren.

Die bevorzugten Ausgestaltungen der Unteransprüche 7 bis 9 betreffen vorteilhafte Dimensionierungen und Gestaltungen der Randflächen sowie von Randstreckenzügen in den Randflächen als potenzielle Grundlage für Vorgewendefahrspuren.

Der Unteranspruch 11 stellt eine bevorzugte Möglichkeit bereit, auch Hindernisflächen bei der Bestimmung der Sollfahrspuren effektiv zu berücksichtigen. Hier können verschiedene prinzipielle Anordnungsvarianten einer solchen Hindernisfläche berücksichtigt werden.

Der Unteranspruch 12 wiederum betrifft einen bevorzugten Ansatz, mit dem ausgewählte Randstreckenzüge als Sollfahrspuren bestimmt werden können. Auf diese Art und Weise können die vorschlagsgemäß umlaufend angesetzten potenziellen Vorgewendeflächen wieder auf das sinnvolle Maß zurückgeführt werden.

Der Unteranspruch 13 schließlich betrifft die Möglichkeit, das vorschlagsgemäße Verfahren jeweils separat für verschiedene Arbeitsgeräte durchzuführen, was insbesondere durch eine unterschiedliche Arbeitsbreite der jeweiligen Arbeitsgeräte angezeigt sein kann.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1a-c): mehrere Aspekte bei der Bestimmung einer Mindestrandbreite der Randfläche des Feldbereichs nach dem vorschlagsgemäßen Verfahren,
- Fig. 2a-b): den Feldbereich aus der Fig. 1 mit einer Randfläche und Randstreckenzügen, welche nach dem vorschlagsgemäßen Verfahren ermittelt wurden,
- Fig. 3a-b): den Feldbereich aus der Fig. 1 mit Sollfahrspuren und Vorgewendespuren, welche nach dem vorschlagsgemäßen Verfahren ermittelt wurden und
- Fig. 4a-d): mögliche Positionen von Hindernisflächen in einem Feldbereich und deren Berücksichtigung bei der Bestimmung von Sollfahrspuren entsprechend dem vorschlagsgemäßen Verfahren.

Das vorschlagsgemäße Verfahren dient der Bestimmung von Sollfahrspuren 1 in einem landwirtschaftlichen Feldbereich 2a, b für eine Routenplanung einer landwirtschaftlichen Arbeitsmaschine 3a, b. Vorschlagsgemäß wird dabei ein Innenfeld 4a, b mit einer Innenfeldgrenze 5a, b im Feldbereich 2a, b definiert, sodass sich zwischen einer Grenzkontur 6a, b des Feldbereichs 2a, b und der Innenfeldgrenze 5a, b eine Randfläche 7a, b ergibt. Vorschlagsgemäß werden weiter in dem Innenfeld 4a, b verlaufende Sollfahrspuren 1 für die Routenplanung bestimmt.

Das vorschlagsgemäße Verfahren ist dadurch gekennzeichnet, dass Randstreckenzüge 8a-i bestimmt werden, welche Randstreckenzüge 8a-i in der Randfläche 7a, b entlang der Grenzkontur 6a, b verlaufen und dass eine Bestimmung der Randfläche 7a, b und/oder der Randstreckenzüge 8a-i arbeitsmaschinenspezifische Merkmale berücksichtigt. Auf diese Weise können die Randfläche 7a, b bzw. die Randstreckenzüge 8a-i so ermittelt werden, dass sie den speziellen Anforderungen der Arbeitsmaschine 3a, b insbesondere im Hinblick auf eine Befahrbarkeit durch diese Arbeitsmaschine 3a, b genügen.

Bei dem Feldbereich 2a, b kann es sich entweder um ein gesamtes Feld - wie bevorzugt - oder um einen Teilbereich eines solchen Feldes handeln. Die landwirtschaftliche Arbeitsmaschine 3a, b weist ein jeweiliges Arbeitsgerät 9a, b auf, mit dem der Feldbereich 2a, b bearbeitet werden soll. Die landwirtschaftliche Arbeitsmaschine 3a, b kann auch Teil eines Zuges von mehreren landwirtschaftlichen Arbeitsmaschinen sein, wobei z. B. eine an sich nicht selbstfahrende Arbeitsmaschine von einer anderen Arbeitsmaschine 3a, b wie etwa einem Traktor angetrieben werden kann. Das Arbeitsgerät 9a, b kann ferner lösbar oder fest an der landwirtschaftlichen Arbeitsmaschine 3a, b angeordnet sein. Dementsprechend sind unter "arbeitsmaschinenspezifischen Merkmalen" jedwede Merkmale zu verstehen, welche der Arbeitsmaschine 3a, b im engeren Sinne, den Arbeitsgeräten 9a, b oder etwaigen weiteren Arbeitsmaschinen eines Zuges zugeordnet sind. Solche Merkmale können sowohl den Typ oder die Ausstattung der jeweiligen Arbeitsmaschine 3a, b oder des Arbeitsgeräts 9a, b betreffen. Ebenso können solche Merkmale die Abmessungen, die Leistungswerte oder den Verschleißzustand der Arbeitsmaschine 3a, b oder des Arbeitsgeräts 9a, b, ihre Konfiguration, auf sie bezogene Messwerte oder auch eine Reihenfolge der Anordnung betreffen. Die Definition des Innenfelds 4a, b mit der Innenfeldgrenze 5a, b ist dabei prinzipiell frei und nicht an Bestandsunterschiede, vorgegebene Vorgewendeflächen o. dgl. gebunden.

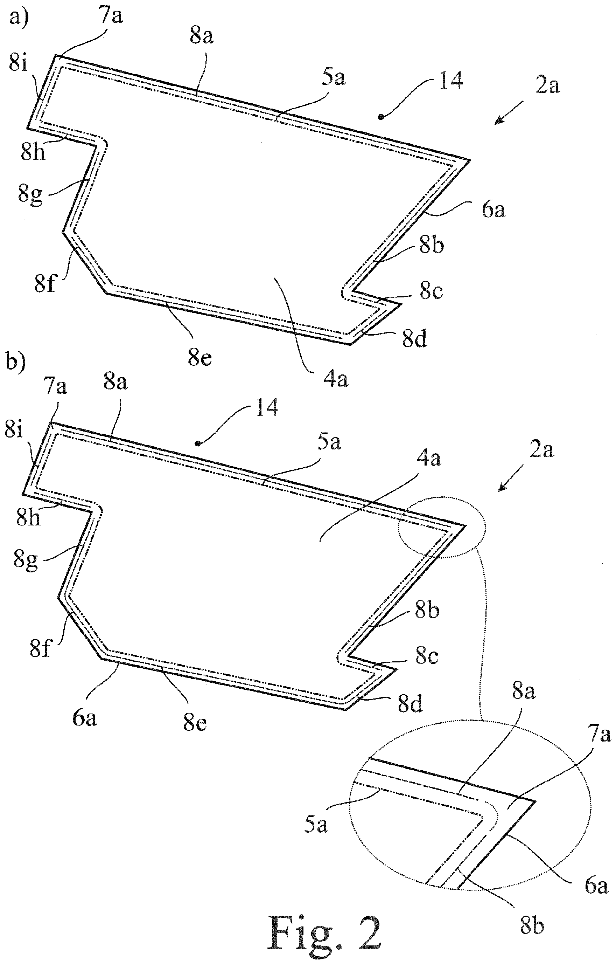

Sowohl die Sollfahrspuren 1 als auch die Randstreckenzüge 8a-i sollen grundsätzlich durch die Arbeitsmaschine 3a, b abgefahren werden, wobei speziell eine Bearbeitung des Feldbereichs 2a, b beim Abfahren der Sollfahrspuren 1 erfolgen soll. Die Sollfahrspuren 1 und die Randstreckenzüge 8a-i unterscheiden sich insoweit, als dass die Sollfahrspuren 1 in dem Innenfeld 4a, b angeordnet sind und die Randstreckenzüge 8a-i in der Randfläche 7a, b angeordnet sind. Ein einzelner Randstreckenzug 8a-i wird durch einen kontinuierlichen Abschnitt in Umlaufrichtung gebildet, wobei der in Umlaufrichtung jeweils nächste Randstreckenzug 8a-i sich an einem Knick oder an einer Ecke an der Grenzkontur 6a, b anschließt. Insbesondere das Kriterium, nach welchem das Vorhandensein eines Knickes oder einer Ecke an der Grenzkontur 6a, b und damit ein Übergang von einem Randstreckenzug 8a-i zum nächsten festgestellt wird, kann auf den arbeitsmaschinenspezifischen Merkmalen beruhen. Zusammengenommen umschließen dann die aufeinanderfolgenden Randstreckenzüge 8a-i im Wesentlichen das Innenfeld 4a, b. Dieser Zusammenhang ist anschaulich in den Fig. 2a, b dargestellt.

Gemäß einer bevorzugten Ausführungsform ist vorgesehen, dass die Randfläche 7a, b das Innenfeld 4a, b umlaufend angeordnet ist. Mit anderen Worten wird das Innenfeld 4a, b vollständig von der Randfläche 7a, b umschlossen. Auf diese Weise ist gewährleistet, dass zumindest prinzipiell auch umlaufende Vorgewendespuren vorgesehen sein können und die Anordnung von Vorgewendespuren in bestimmten Bereichen nicht von vornherein in diesem Stadium bei der Bestimmung von Sollfahrspuren 1 ausgeschlossen wird.

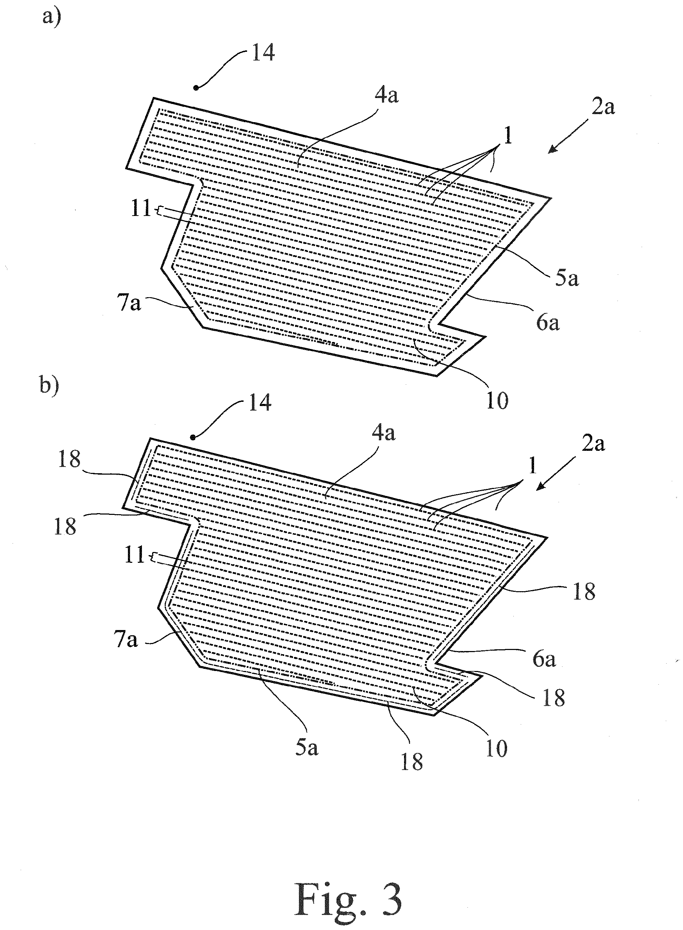

Bezüglich der Sollfahrspuren 1 ist bevorzugt, dass sie mit einer Streckenzugform und einer Hauptausrichtung gemäß einem Hauptstreckenzug 10 bestimmt werden. Ausgehend von einem Hauptstreckenzug 10, welcher beispielhaft ausgewählt in der Fig. 3 gekennzeichnet ist, können also gemäß den Charakteristika dieses Hauptstreckenzugs 10 die Sollfahrspuren 1 definiert werden. Bei diesen Charakteristika des Hauptstreckenzugs 10 handelt es sich insbesondere um die obige Streckenzugform und die Hauptausrichtung. Vorzugsweise und wie in den Fig. 2 bis 4 dargestellt handelt es sich bei der Streckenzugform um eine gerade Strecke, sodass die Sollfahrspuren 1 entsprechend auch gerade Strecken sind. Denkbar wäre aber auch gemäß einer hier nicht dargestellten Variante, dass die Streckenzugform eine Polylinie ist. Hier und nachfolgend ist unter einer "Polylinie" eine Folge von zusammenhängenden Liniensegmenten und/oder Bogensegmenten zu verstehen, wobei die Bogensegmente einen jeweils unterschiedlichen Krümmungsradius aufweisen können. Soweit eine solche Polylinie nur Liniensegmente aufweist, handelt es sich also um einen Polygonzug. Ein geschlossener solcher Polygonzug bildet entsprechend ein Polygon. In so einem Fall würden auch die Sollfahrspuren 1 die Form dieser Polylinie bzw. eine aus dieser Polylinie zusammengesetzte Form oder eine auf dieser Polylinie sonst wie basierende Form aufweisen. Die Hauptausrichtung wiederum definiert die Lage des Hauptstreckenzugs 10 in dem Feldbereich 2a, also in der durch den Feldbereich 2a vorgegebenen Ebene.

Insbesondere der Auswahl der Hauptausrichtung kommt regelmäßig für die Bearbeitung eines Feldbereichs 2a, b eine große Bedeutung zu. Diese Hauptausrichtung kann einerseits von einem Benutzer ausgewählt werden. Bei im Wesentlichen rechteckigen Feldbereichen 2a, b wird häufig eine der längsten Außenlinie entsprechende Hauptausrichtung ausgesucht. Andererseits kann eine geeignete Hauptausrichtung auch insbesondere von einer Rechenvorrichtung nach einem numerischen oder analytischen Verfahren bestimmt werden. Daher ist es bevorzugt, dass die Hauptausrichtung des Hauptstreckenzugs 10 ausgehend von der Streckenzugform basierend auf der Optimierung eines Feldbearbeitungsaufwands der landwirtschaftlichen Arbeitsmaschine 3a, b bestimmt wird. Es wird also die Streckenzugform von einem Benutzer vorgegeben oder durch einen weiteren, vorgelagerten Optimierungsschritt z. B. aus der Grenzkontur 6a, b bestimmt und dann für diese Streckenzugform die geeignete Hauptausrichtung 10 bestimmt. Danach findet eine numerische oder analytische Optimierung eines Feldbearbeitungsaufwands in Abhängigkeit von der Hauptausrichtung statt. Vorzugsweise berücksichtigt auch diese Optimierung des Feldbearbeitungsaufwands die obigen arbeitsmaschinenspezifischen Merkmale.

Hier ist weiter bevorzugt, dass dieser Feldbearbeitungsaufwand auf einer Vielzahl von Aufwandsgrößen basiert, welche insbesondere gewichtet in den Feldbearbeitungsaufwand einfließen können. Diese Aufwandsgrößen können eine Gesamtbearbeitungslänge, eine Gesamtbearbeitungszeit und/oder eine Doppelbearbeitungsflächengröße umfassen. Dabei kann diese Gesamtbearbeitungslänge auf einer Gesamtlänge der Sollfahrspuren 1 basieren, ggf. zusätzlich auch auf einer Gesamtlänge von Vorgewendespuren, welche untenstehend noch näher beschrieben werden. Die Gesamtbearbeitungszeit kann auf dieser Gesamtlänge und außerdem auf der Anzahl der Schnittpunkte der Sollfahrspuren mit der Innenfeldgrenze 5a, b basieren. Schließlich kann die Doppelbearbeitungsflächengröße auf einem jeweiligen Schnittwinkel der Sollfahrspuren 1 mit der Innenfeldgrenze 5a, b basieren. Speziell trägt jeder Schnittpunkt der Sollfahrspuren 1 mit der Innenfeldgrenze 5a, b zu der Doppelbearbeitungsflächengröße in einem Umfang bei, welcher von diesem Schnittwinkel abhängt, wobei der Beitrag umso größer ist, je mehr dieser Schnittwinkel von dem Lot abweicht. Jeder einzelne dieser Aufwandsgrößen kann auf den arbeitsmaschinenspezifischen Merkmalen basieren.

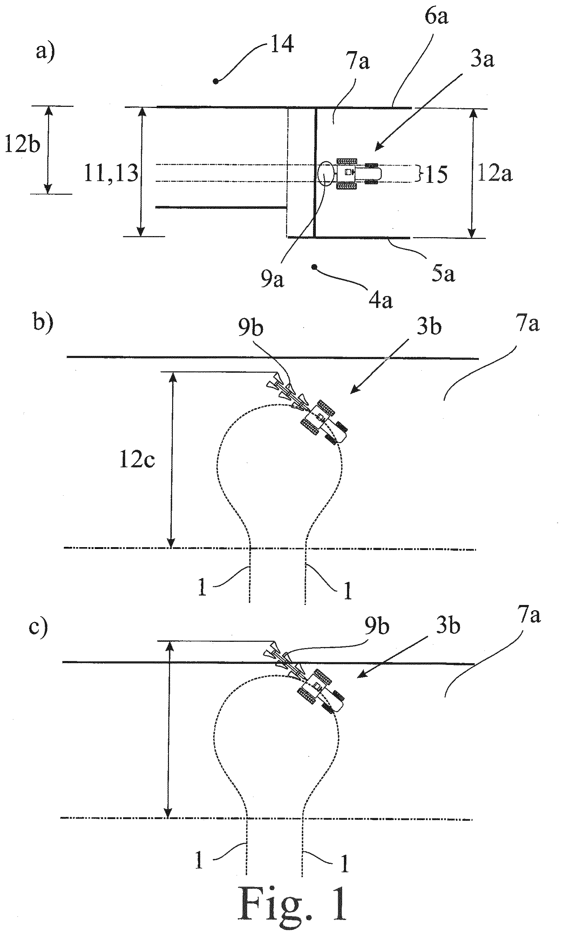

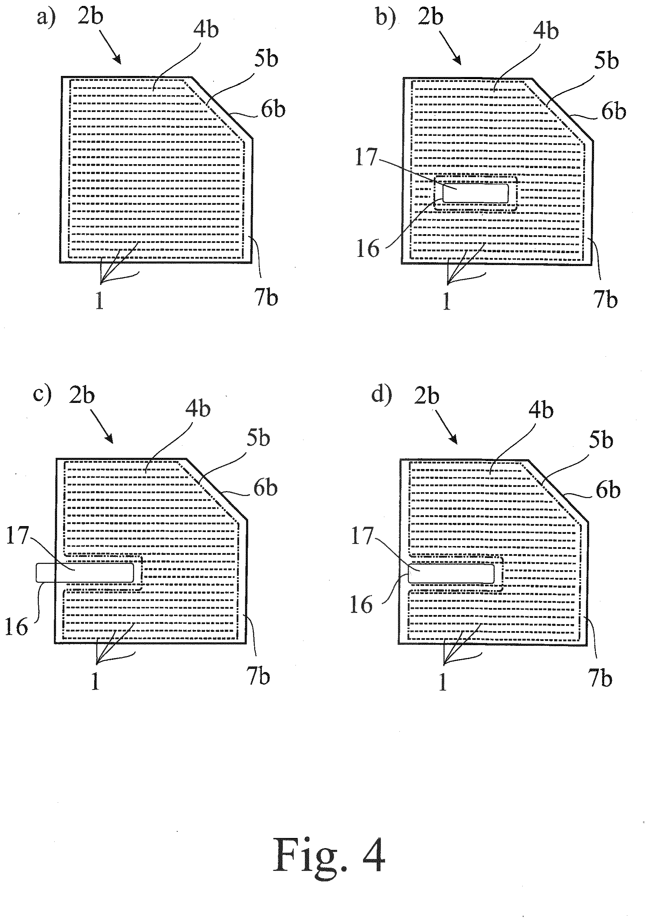

Es ist, wie in den Fig. 3 und 4 dargestellt, weiter bevorzugt, dass die Sollfahrspuren 1 im Wesentlichen parallel zueinander angeordnet sind. Bezüglich des Abstandes benachbarter Sollfahrspuren 1 ist bevorzugt vorgesehen, dass die Sollfahrspuren 1 unter Berücksichtigung der arbeitsmaschinenspezifischen Merkmale bestimmt werden. Insbesondere können die Sollfahrspuren 1 jeweils im Wesentlichen um eine Arbeitsbreite 11 der landwirtschaftlichen Arbeitsmaschine 3a, b versetzt angeordnet bestimmt werden. Speziell kann es sich bei dieser Arbeitsbreite 11 - welche in der Fig. 1 a dargestellt ist - um die Arbeitsbreite 11 eines Arbeitsgeräts 9a, b der Arbeitsmaschine 3a, b handeln. Die Arbeitsbreite 11 gibt an, auf welcher Breite bei der Fahrt der Arbeitsmaschine 3a, b eine Bearbeitung des Feldbereichs 2a, b stattfindet. Durch diese Wahl des Abstandes benachbarter Sollfahrspuren 1 ist gewährleistet, dass das Innenfeld 4a, b im Wesentlichen vollständig bearbeitet wird und dabei im Wesentlichen keine Doppelbearbeitung stattfindet.

Bezüglich der Randstreckenzüge 8a-i ist es bevorzugt, dass sie in Umlaufrichtung und jeweils im Wesentlichen parallel zu einem benachbarten Abschnitt der Grenzkontur 6a, b verlaufen. Diese Umlaufrichtung bezieht sich auf die umlaufende Eigenschaft der Randfläche 7a, b um das Innenfeld 4a, b. Aus der Darstellung der Fig. 2a, b ist speziell der jeweils zu dem benachbarten Abschnitt der Grenzkontur 6a, b im Wesentlichen parallele Verlauf der Randstreckenzüge 8a-i zu erkennen. Dabei wird der genaue Verlauf der Randstreckenzüge 8a-i innerhalb der Randfläche 7a, b vorzugsweise unter Berücksichtigung von arbeitsmaschinenspezifischen Merkmalen bestimmt. So können die Randstreckenzüge 8a-i auf einer "Glättung" des benachbarten Abschnitts der Grenzkontur 6a, b basieren, wenn dieser etwa unregelmäßig verläuft. Ebenso können die Randstreckenzüge 8a-i - bei entsprechend gegebener Breite der Randfläche 7a, b - auch dann gerade innerhalb der Randfläche 7a, b bestimmt werden, wenn der benachbarte Abschnitt der Grenzkontur 6a, b nicht genau gerade ist. Das kann insbesondere dann vorteilhaft sein, wenn auf Grund der arbeitsmaschinenspezifischen Merkmale die Arbeitsmaschine 3a, b einer solchen Grenzkontur 6a, b nicht oder nur mit reduzierter Geschwindigkeit genau folgen könnte.

Ebenso kann es vorzugsweise - gemäß einer hier nicht dargestellten Variante - bei entsprechender Breite der Randfläche 7a, b auch sein, dass mehrere Randstreckenzüge 8a-i nebeneinander in Umlaufrichtung verlaufen. Auch dies wird bevorzugt unter Berücksichtigung der arbeitsmaschinenspezifischen Merkmale bestimmt.

Wie oben beschrieben folgen die Randstreckenzüge 8a-i im Wesentlichen der Grenzkontur 6a, b. Diese Grenzkontur 6a, b ist aber in ihrem Verlauf a priori beliebig, kann also grundsätzlich Winkel beliebiger Art und Folge in ebenso beliebigen Abständen aufweisen. Die Manövrierfähigkeit der Arbeitsmaschine 3a, b - welche durch arbeitsmaschinenspezifische Merkmale bestimmt ist - begrenzt aber die Möglichkeit der Arbeitsmaschine 3a, b, jedem beliebigen Verlauf der Grenzkontur 6a, b und der entsprechenden aufeinanderfolgenden Randstreckenzüge 8a-i zu folgen, welche ja an den "Ecken" der Grenzkontur 6a, b aufeinandertreffen. Begrenzt sein kann etwa die maximale fahrbare Krümmung oder die maximale Änderung der Krümmung. Diese Frage stellt sich auch dann, wenn die Arbeitsmaschine 3a, b beim Abfahren von zwei in Umlaufrichtung aufeinanderfolgenden Randstreckenzügen 8a, b eine gerundete Kurve gemäß der vergrößerten Ansicht der Fig. 2b fahren soll. Basierend auf der gegenseitigen Lage zweier solcher aufeinanderfolgender Randstreckenzügen 8a, b und den arbeitsmaschinenspezifischen Merkmalen kann bestimmt werden, ob die Arbeitsmaschine 3a, b diese Randstreckenzüge 8a, b hintereinander abfahren kann.

Um also abfahrbare aufeinanderfolgende Randstreckenzüge 8a, b zusammenzufassen, ist bevorzugt vorgesehen, dass in Umlaufrichtung aufeinanderfolgende Randstreckenzüge 8a-i unter Berücksichtigung der arbeitsmaschinenspezifischen Merkmale verbunden werden. Vorzugsweise werden in Umlaufrichtung aufeinanderfolgende Randstreckenzüge 8a-i verbunden, wenn die landwirtschaftliche Arbeitsmaschine 3a, b die verbundenen Randstreckenzüge 8a-i, insbesondere hinsichtlich einer Krümmung, abfahren kann. Weiter bevorzugt ist ebenso, dass ansonsten aufeinanderfolgende Randstreckenzüge 8a-i getrennt bleiben. Als Ergebnis dieses bevorzugten Verfahrensschritts verbleiben jeweils verbundene Randstreckenzüge 8a-i, welche abfahrbar sind und wobei ebenso feststeht, dass nicht verbundene Randstreckenzüge 8a-i eben nicht hintereinander abfahrbar sind. Dieser Umstand kann bei einer sich anschließenden Routenplanung dadurch berücksichtigt werden, dass die Arbeitsmaschine 3a, b am Ende eines Randstreckenzugs 8a-i nicht auf den nächsten, nicht verbundenen Randstreckenzug 8a-i geführt wird, sondern stattdessen jedenfalls zunächst auf eine Sollfahrspur 1 am Ende des Randstreckenzugs 8a-i wechselt.

Speziell geht aus einem Vergleich der Fig. 2a mit der Fig 2b für dieses Beispiel hervor, dass die Randstreckenzüge 8d, 8e, 8f und 8g gemäß diesem Kriterium miteinander verbunden werden, aber die übrigen Randstreckenzüge 8a, b, c, h, i nicht miteinander verbunden werden.

Zur Bestimmung einer Breite der Randfläche 7a, b bzw. eines Abstandes der Innenfeldgrenze 5a, b zu der Grenzkontur 6a, b ist vorgesehen, dass die Randfläche 7a, b eine Mindestrandbreite 12a-c aufweist. Die Randfläche 7a, b kann auch ganz oder abschnittsweise eine die Mindestrandbreite 12a-c übersteigende Randbreite aufweisen.

Die Mindestbreite 12a-c wird basierend auf den arbeitsmaschinenspezifischen Merkmalen bestimmt. Speziell kann die Mindestrandbreite 12a-c basierend auf einer maximalen Arbeitsbreite 13 der landwirtschaftlichen Arbeitsmaschine 3a, b bestimmt werden. Diese maximale Arbeitsbreite 13 kann speziell der Arbeitsbreite 11 desjenigen Arbeitsgeräts 9a, b einer Arbeitsmaschine 3a, b für diesen Feldbereich 2a, b entsprechen, welches die größte Arbeitsbreite 11 aufweist. Regelmäßig handelt es sich bei diesem Arbeitsgerät 9a um eine Feldspritze. Bei einer Wahl der Mindestrandbreite 12a, welche im Wesentlichen der maximalen Arbeitsbreite 13 entspricht - gemäß der Darstellung auf der rechten Seite der Fig. 1a - kann also die Arbeitsmaschine 3a, b prinzipiell mit diesem Arbeitsgerät 9b umlaufend durch die Randfläche 7a, b fahren, ohne mit dem Arbeitsgerät entweder in das Innenfeld 4a, b oder in einen Außerfeldbereich 14 zu ragen.

Erfindungsgemäß wird die Mindestrandbreite 12b so gewählt, dass sie mindestens einer Summe aus der halben maximalen Arbeitsbreite 13 und der halben Fahrgassenbreite 15 der Arbeitsmaschine 3a, b entspricht. Dann kann die Randfläche 7a, b prinzipiell zumindest so durch die Arbeitsmaschine 3a, b umlaufend befahren werden, dass die Arbeitsmaschine 3a, b vollständig in der Randfläche 7a, b fährt und das Arbeitsgerät 9a, b zwar in das Innenfeld 4a, b ragt, nicht aber in den Außerfeldbereich 14.

Da die Arbeitsmaschine 3a, b regelmäßig ein Wendemanöver in der Randfläche 7a, b durchführen soll, kann die Mindestrandbreite 12a-c bevorzugt auch unter diesem Gesichtspunkt bestimmt werden. Vorzugsweise wird also die Mindestrandbreite 12a-c basierend auf einer Wendefähigkeit der landwirtschaftlichen Arbeitsmaschine 3a, b bestimmt. Die Mindestrandbreite 12a-c kann also so gewählt sein, dass die Arbeitsmaschine 3a, b, ggf. auch unter Berücksichtigung des Arbeitsgeräts 9a, b und etwaiger weiterer Arbeitsmaschinen, von einer Sollfahrspur 1 kommend eine Wende in der Randfläche 7a, b ausführen kann. Das bedeutet, dass dabei weder die Randfläche 7a, b verlassen wird noch eine Selbst-Kollision zwischen der Arbeitsmaschine 3a, b und dem ggf. separaten Arbeitsgerät 9a, b oder etwaig vorhandenen weiteren Arbeitsmaschinen passieren kann. Die Fig. 1b zeigt dabei eine Randfläche 7a mit einer unter diesem Kriterium hinreichend großen Mindestrandbreite 12c, wobei die in der Fig. 1c dargestellte Randfläche 7a diese Bedingung erkennbar nicht erfüllt. Es kann hierbei die erforderliche Mindestrandbreite 12a-c auch davon abhängig sein, wieweit die die Wende definierenden Sollfahrspuren 1 zueinander versetzt sind. Bei einem größeren Abstand - etwa durch dazwischenliegende "übersprungene" Sollfahrspuren 1 - kann auch eine geringere Mindestrandbreite 12a-c in Betracht kommen. Da aber regelmäßig eine Wende zwischen benachbarten Sollfahrspuren 1 erforderlich ist, betrifft vorzugsweise die Wendefähigkeit jeweils eine Wende der landwirtschaftlichen Arbeitsmaschine 3a, b zwischen benachbarten Sollfahrspuren 1.

Auch für den genauen Verlauf der Innenfeldgrenze 4a, b kann vorgesehen, dass die Innenfeldgrenze 5a, b der Grenzkontur 6a, b folgt. Daher ist es bevorzugt, dass die Innenfeldgrenze 5a, b abschnittsweise im Wesentlichen parallel zu der Grenzkontur 6a, b verläuft. Hier kann es insbesondere sein, dass die Innenfeldgrenze 5a, b im Wesentlichen um die Mindestrandbreite 12a-c versetzt zu der Grenzkontur 6a, b verläuft.

Die Grenzkontur 6a, b umfasst zum einen die Begrenzung des Feldbereichs 2a, b gegenüber dem obigen Außerfeldbereich 14. Es kann aber auch sein, dass sich ein durch eine Hinderniskontur 16 definierter Hindernisbereich 17 ganz oder teilweise in dem Feldbereich 2a, b befindet. Ganz allgemein stellt dieser Hindernisbereich 16 einen Bereich dar, welcher weder von der Arbeitsmaschine 3a, b noch von dem Arbeitsgerät 9a, b betreten werden soll. Ein solcher Hindernisbereich 17 kann dadurch berücksichtigt werden, dass die Hinderniskontur 16 wie die Grenzkontur 6a, b behandelt wird. Entsprechend ist bevorzugt vorgesehen, dass die Grenzkontur 6a, b eine Hinderniskontur 16 um einen Hindernisbereich 17 zumindest teilweise umfasst. Verschiedene diesbezügliche Varianten sind in den Fig. 4a-d dargestellt.

Es zeigt die Fig. 4a den Feldbereich 2b mit der Innenfeldgrenze 5b und dem Innenfeld 4b. Ebenso sind Sollfahrspuren 1 in dem Innenfeld 4b dargestellt. In der Variante der Fig. 4a ist kein Hindernisbereich 17 vorgesehen.

In der Variante der Fig. 4b hingegen ist in dem Innenfeld 4b der Hindernisbereich 17 angeordnet. Dabei wird in der Fig. 4b der Hindernisbereich 17 wie bevorzugt von dem Feldbereich 2b umschlossen. Ebenso wird in der Fig. 4b wie bevorzugt der Hindernisbereich 17 von der Innenfeldgrenze 5b umschlossen. Folglich ergibt sich eine Randfläche 7c zwischen dem Innenfeld 5b und der Hinderniskontur 16. Diese ist nicht zusammenhängend mit der Randfläche 7b, wird aber ebenso behandelt wie die Randfläche 7b an der Grenzkontur 6a, b.

In der Variante der Fig. 4c ragt der Hindernisbereich 17 aus dem Feldbereich 2b hinaus. Folglich folgt die umlaufende und zusammenhängende Randfläche 7b an den entsprechenden Abschnitten der Hinderniskontur 16.

In der Variante der Fig. 4d schließlich ist zwar auch der Hindernisbereich 17 von dem Feldbereich 2b umschlossen, die Randfläche 7b um die Hinderniskontur 16 und um die Grenzkontur 6b überlappen sich aber so, dass kein Innenfeld 4b an dieser Stelle zwischen der Grenzkontur 6b und der Hinderniskontur 16 verbleibt. Für die Anwendung des vorschlagsgemäßen Verfahrens wie beschrieben bereitet dies aber ebenso keinerlei Schwierigkeiten.

Zwar wird vorschlagsgemäß zunächst eine Randfläche 7a, b so angesetzt, dass sie das Innenfeld 4a, b umläuft. Es kann sich aber im Nachhinein herausstellen, dass an bestimmten Abschnitten entlang der Grenzkontur 6a, b ein Vorgewende nicht erforderlich ist und daher dort eine reguläre Bearbeitung des Feldbereichs 2a, b stattfinden kann. Deshalb ist es bevorzugt, dass ein Randstreckenzug 8a-i als Sollfahrspur 1 bestimmt wird, wenn der Randstreckenzug 8a-i im Wesentlichen parallel zu einer benachbarten Sollfahrspur 1 verläuft. Diese Bedingung ist speziell für den Randstreckenzug 8a in der Fig. 2a erfüllt, sodass dieser Randstreckenzug 8a gemäß der Darstellung der Fig. 3b als Sollfahrspur 1 bestimmt wird. Bevorzugt ist vorgesehen, dass andernfalls der Randstreckenzug 8b-i als Vorgewendespur 18 bestimmt wird. Dies ist für die Randstreckenzüge 8b-i wiederum in der Fig. 3b dargestellt.

Auch aus den Fig. 4b-d ist zu erkennen, dass Sollfahrspuren 1 in der Randfläche 7b verlaufen, welche auf Randstreckenzüge zurückgehen, die die obige Bedingung erfüllen. Der Übersichtlichkeit halber sind die Vorgewendespuren in den Fig. 4a-d nicht dargestellt.

Die anschließende Routenplanung kann dann auf Grundlage dieser Sollfahrspuren 1 und der Vorgewendespuren 18 erfolgen. Dabei ist bevorzugt, dass ein Schnittpunkt zwischen einer Sollfahrspur 1 und der Innenfeldgrenze 4a, b bei der Routenplanung als Übergangspunkt zwischen der jeweiligen Sollfahrspur 1 und einer Vorgewendespur 18 bestimmt wird.

Es wurde bereits darauf hingewiesen, dass verschiedene Arbeitsgeräte 9a, b jeweils eine unterschiedliche Arbeitsbreite 11 aufweisen können. Da speziell der Abstand der Sollfahrspuren 1 untereinander bevorzugt im Wesentlichen dieser Arbeitsbreite 11 entspricht, ergeben sich dementsprechend unterschiedliche Sollfahrspuren 1 je nach Arbeitsgerät 9a, b. Im Gegensatz dazu wird die Mindestrandbreite 12a-c bevorzugt nach der maximalen Arbeitsbreite 13 bestimmt. Bevorzugt ist daher, dass das Bestimmen der Sollfahrspuren 1 jeweils für verschiedene Arbeitsgeräte 9a, b der landwirtschaftlichen Arbeitsmaschine 3a, b separat durchgeführt wird.

### Bezugszeichenliste

- 1: Sollfahrspur
- 2 a, b: Feldbereich
- 3 a, b: Landwirtschaftliche Arbeitsmaschine
- 4 a, b: Innenfeld
- 5 a, b: Innenfeldgrenze
- 6 a, b: Grenzkontur
- 7 a, b: Randfläche
- 8 a-i: Randstreckenzüge
- 9 a, b: Arbeitsgerät
- 10: Hauptstreckenzug
- 11: Arbeitsbreite
- 12 a-c: Mindestrandbreite
- 13: Maximale Arbeitsbreite
- 14: Außerfeldbereich
- 15: Fahrgassenbreite
- 16: Hinderniskontur
- 17: Hindernisbereich
- 18: Vorgewendespur

## Patentansprüche

1. Verfahren zur Bestimmung von Sollfahrspuren (1) in einem landwirtschaftlichen Feldbereich (2a, b) für eine Routenplanung einer landwirtschaftlichen Arbeitsmaschine (3a, b), wobei ein Innenfeld (4a, b) mit einer Innenfeldgrenze (5a, b) im Feldbereich (2a, b) definiert wird, sodass sich zwischen einer Grenzkontur (6a, b) des Feldbereichs (2a, b) und der Innenfeldgrenze (5a, b) eine Randfläche (7a, b) ergibt und wobei in dem Innenfeld (4a, b) verlaufende Sollfahrspuren (1) für die Routenplanung bestimmt werden,
wobei Randstreckenzüge (8a-i) bestimmt werden, welche in der Randfläche (7a, b) entlang der Grenzkontur (6a, b) verlaufen,
**dadurch gekennzeichnet,**
**dass** eine Bestimmung der Randfläche (7a, b) arbeitsmaschinenspezifische Merkmale berücksichtigt, wobei die Randfläche (7a, b) eine Mindestrandbreite aufweist (12a-c), wobei die Mindestrandbreite (12a-c) basierend auf den arbeitsmaschinenspezifischen Merkmalen bestimmt wird, wobei die Mindestrandbreite (12b) so gewählt wird, dass sie mindestens einer Summe aus einer halben maximalen Arbeitsbreite (13) und einer halben Fahrgassenbreite (15) der Arbeitsmaschine (3a, b) entspricht.

2. Verfahren nach Anspruch 1, **dadurch gekennzeichnet, dass** die Randfläche (7a, b) das Innenfeld (4a, b) umlaufend angeordnet ist.

3. Verfahren nach Anspruch 1 oder 2, **dadurch gekennzeichnet, dass** die Sollfahrspuren (1) in dem Innenfeld (4a, b) mit einer Streckenzugform und einer Hauptausrichtung gemäß einem Hauptstreckenzug (10) bestimmt werden.

4. Verfahren nach Anspruch 3, **dadurch gekennzeichnet, dass** die Hauptausrichtung des Hauptstreckenzugs (10) ausgehend von der Streckenzugform basierend auf der Optimierung eines Feldbearbeitungsaufwands der landwirtschaftlichen Arbeitsmaschine (3a, b) bestimmt wird.

5. Verfahren nach Anspruch 4, **dadurch gekennzeichnet, dass** der Feldbearbeitungsaufwand auf einer Vielzahl von, vorzugsweise gewichteten, Aufwandsgrö-βen basiert, insbesondere, dass die Aufwandsgrößen eine Gesamtbearbeitungslänge, eine Gesamtbearbeitungszeit und/oder eine Doppelbearbeitungsflächengröße umfassen.

6. Verfahren nach einem der Ansprüche 1 bis 5, **dadurch gekennzeichnet, dass** die Sollfahrspuren (1) im Wesentlichen parallel zueinander angeordnet sind, vorzugsweise, dass die Sollfahrspuren (1) unter Berücksichtigung der arbeitsmaschinenspezifischen Merkmale bestimmt werden, insbesondere, dass die Sollfahrspuren (1) im Wesentlichen um eine Arbeitsbreite (11) der landwirtschaftlichen Arbeitsmaschine (3a, b) versetzt angeordnet bestimmt werden.

7. Verfahren nach einem der Ansprüche 1 bis 6, **dadurch gekennzeichnet, dass** die Randstreckenzüge (8a-i) in Umlaufrichtung und jeweils im Wesentlichen parallel zu einem benachbarten Abschnitt der Grenzkontur (6a, b) verlaufen.

8. Verfahren nach einem der Ansprüche 1 bis 7, **dadurch gekennzeichnet, dass** mehrere Randstreckenzüge (8a-i) nebeneinander in Umlaufrichtung verlaufen.

9. Verfahren nach einem der Ansprüche 1 bis 8, **dadurch gekennzeichnet, dass** in Umlaufrichtung aufeinanderfolgende Randstreckenzüge (8a-i) unter Berücksichtigung der arbeitsmaschinenspezifischen Merkmale verbunden werden, vorzugsweise, dass in Umlaufrichtung aufeinanderfolgende Randstreckenzüge (8a-i) verbunden werden, wenn die landwirtschaftliche Arbeitsmaschine (3a, b) die verbundenen Randstreckenzügen (8a-i), insbesondere hinsichtlich einer Krümmung, abfahren kann, weiter vorzugsweise, dass ansonsten aufeinanderfolgende Randstreckenzüge (8a-i) getrennt bleiben.

10. Verfahren nach einem der Ansprüche 1 bis 9, **dadurch gekennzeichnet, dass** die Innenfeldgrenze (5a, b) abschnittsweise im Wesentlichen parallel, vorzugsweise im Wesentlichen um die Mindestrandbreite (12a-c) versetzt, zu der Grenzkontur (6a, b) verläuft.

11. Verfahren nach einem der Ansprüche 1 bis 10, **dadurch gekennzeichnet, dass** die Grenzkontur (6a, b) eine Hinderniskontur (16) um einen Hindernisbereich (17) zumindest teilweise umfasst, vorzugsweise, dass der Hindernisbereich (17) von dem Feldbereich (2a, b) umschlossen wird, insbesondere, dass der Hindernisbereich (17) von der Innenfeldgrenze (5a, b) umschlossen wird.

12. Verfahren nach einem der Ansprüche 1 bis 11, **dadurch gekennzeichnet, dass** ein Randstreckenzug (8a-i) als Sollfahrspur (1) bestimmt wird, wenn der Randstreckenzug (8a-i) im Wesentlichen parallel zu einer benachbarten Sollfahrspur (1) verläuft, vorzugsweise, dass andernfalls der Randstreckenzug (8a-i) als Vorgewendespur (18) bestimmt wird, insbesondere, dass ein Schnittpunkt zwischen einer Sollfahrspur (1) und der Innenfeldgrenze (4a, b) bei der Routenplanung als Übergangspunkt zwischen der jeweiligen Sollfahrspur (1) und einer Vorgewendespur (18) bestimmt wird.

13. Verfahren nach einem der Ansprüche 1 bis 12, **dadurch gekennzeichnet, dass** das Bestimmen der Sollfahrspuren (1) jeweils für verschiedene Arbeitsgeräte (9a, b) der landwirtschaftlichen Arbeitsmaschine (3a, b) separat durchgeführt wird.

## Claims

1. A method of determining target travel routes (1) in an agricultural field area (2a, b) for route planning of an agricultural working machine (3a, b), wherein an inner field (4a, b) is defined with an inner field boundary (5a, b) in the field area (2a, b) so that there is an edge surface (7a, b) between a boundary contour (6a, b) of the field area (2a, b) and the inner field boundary (5a, b), and wherein target travel routes (1) extending in the inner field (4a, b) (1) are determined for route planning, wherein edge polylines (8a-i) are determined which extend in the edge surface (7a, b) along the boundary contour (6a, b),
**characterised in that**
determining the edge surface (7a, b) takes account of working machine-specific features, wherein the edge surface (7a, b) has a minimum edge width (12a-c), wherein the minimum edge width (12a-c) is determined based on the machine-specific features, wherein the minimum edge width (12b) is so selected that it corresponds at least to a sum of half a maximum working width (13) and half a travel track width (15) of the working machine (3a, 3b)

2. A method according to claim 1 **characterised in that** the edge surface (7a, b) is arranged to extend around the inner field (4a, b).

3. A method according to claim 1 or 2 **characterised in that** the target travel routes (1) in the inner field (4a, b) are determined with a polyline form and a main orientation according to a main polyline (10).

4. A method according to claim 3 **characterised in that** the main orientation of the main polyline (10) is determined starting from the polyline form based on optimisation of a field processing work of the agricultural machine (3a, b).

5. A method according to claim 4 **characterised in that** the field processing work is based on a plurality of, preferably weighted, work magnitudes, in particular that the work magnitudes include a total processing length, a total processing time and/or a double processing area magnitude.

6. A method according to one of claims 1 to 5 **characterised in that** the target travel routes (1) are arranged substantially parallel to one another, preferably that the target travel routes (1) are determined taking into account the machine-specific features, and in particular the target travel routes (1) are determined arranged displaced substantially by a working width (11) of the working machine (3a, b).

7. A method according to one of claims 1 to 6 **characterised in that** the edge polylines (8a-i) extend in the peripheral direction and respectively substantially parallel to an adjacent portion of the boundary contour (6a, b).

8. A method according to one of claims 1 to 7 **characterised in that** a plurality of edge polylines (8a-i) extend side by side in the peripheral direction.

9. A method according to one of claims 1 to 8 **characterised in that** edge polylines (8a-i) which are successive in the peripheral direction are connected taking into account the machine-specific features, and preferably that edge polylines (8a-i) which are successive in the peripheral direction are connected when the agricultural machine (3a, b) can cover the connected edge polylines (8a-i), in particular with regard to a curve, further preferably that otherwise successive edge polylines (8a-i) remain separate.

10. method according to one of claims 1 to 9 **characterised in that** the inner field boundary (5a, b) extends portion-wise substantially parallel, preferably displaced substantially by the minimum edge width (12a-c), with respect to the boundary contour (6a, b).

11. A method according to one of claims 1 to 1 **characterised in that** the boundary contour (6a, b) at least partially includes an obstacle contour (16) around an obstacle area (17), and preferably the obstacle area (17) is enclosed by the field area (2a, b), and in particular the obstacle area (17) is enclosed by the inner field boundary (5a, b).

12. A method according to one of claims 1 to 11 **characterised in that** an edge polyline (8a-i) is determined as the target travel route (1) if the edge polyline (8a-i) extends substantially parallel to an adjacent target travel route (1), and preferably otherwise the edge polyline (8a-i) is determined as a headland route (18), and in particular an intersection between a target travel route (1) and the inner field boundary (4a, b) is determined in route planning as a transition point between the respective target travel route (1) and a headland route (18).

13. A method according to one of claims 1 to 142**characterised in that** the target travel routes (1) are respectively determined separately for different working implements (9a, b) of the agricultural working machine (3a, b).

## Revendications

1. Procédé de détermination de traces de passage de consigne (1) dans une zone de champ agricole (2a, b) pour une planification d'itinéraire d'une machine de travail agricole (3a, b), un champ intérieur (4a, b) avec une limite de champ intérieur (5a, b) étant défini dans la zone de champ (2a, b), de façon à obtenir entre un contour de limite (6a, b) de la zone de champ (2a, b) et la limite de champ intérieur (5a, b), une surface de bord (7a, b), et des traces de passage de consigne (1) s'étendant dans le champ intérieur (4a, b) étant déterminées pour la planification d'itinéraire, des tracés de parcours de bord (8ai) étant déterminés, lesquels s'étendent dans la surface de bord (7a, b) le long du contour de limite (6a, b), **caractérisé en ce qu'**une détermination de la surface de bord (7a, b) prend en compte des caractéristiques spécifiques à la machine de travail, la surface de bord (7a, b) présentant une largeur de bord minimale (12a-c), la largeur de bord minimale (12a-c) étant déterminée sur la base des caractéristiques spécifiques à la machine de travail, la largeur de bord minimale (12b) étant sélectionnée de façon à correspondre au moins à une somme d'une demi-largeur de travail maximale (13) et d'une demi-largeur d'allée de circulation (15) de la machine de travail (3a, b).

2. Dispositif selon la revendication 1, **caractérisé en ce que** la surface de bord (7a, b) est disposée à la périphérie du champ intérieur (4a, b).

3. Procédé selon la revendication 1 ou 2, **caractérisé en ce que** les traces de passage de consigne (1) sont déterminées dans le champ intérieur (4a, b) avec une forme de tracé de parcours et une orientation principale conformes à un tracé de parcours principal (10).

4. Procédé selon la revendication 3, **caractérisé en ce que** l'orientation principale du tracé de parcours principal (10) est déterminée à partir de la forme de tracé de parcours sur la base de l'optimisation d'une mise en œuvre de travail en champ de la machine de travail agricole (3a, b).

5. Procédé selon la revendication 4, **caractérisé en ce que** la mise en œuvre en champ repose sur une pluralité de grandeurs de mise en œuvre, de préférence pondérées, en particulier **en ce que** les grandeurs de mise en œuvre incluent une longueur de travail totale, un temps de travail total et/ou une superficie de travail double.

6. Procédé selon une des revendications 1 à 5, **caractérisé en ce que** les traces de passage de consigne (1) sont disposées sensiblement parallèlement les unes aux autres, de préférence **en ce que** les traces de passage de consigne (1) sont déterminées en tenant compte des caractéristiques spécifiques à la machine de travail, en particulier **en ce que** les traces de passage de consigne (1) sont déterminées en étant disposées de façon sensiblement décalée de la valeur d'une largeur de travail (11) de la machine de travail agricole (3a, b).

7. Procédé selon une des revendications 1 à 6, **caractérisé en ce que** les tracés de parcours de bord (8a-i) s'étendent dans la direction périphérique et respectivement sensiblement parallèlement à la portion voisine du contour de limite (6a, b).

8. Procédé selon une des revendications 1 à 7, **caractérisé en ce que** plusieurs tracés de parcours de bord (8a-i) s'étendent les uns à côté des autres dans la direction périphérique.

9. Procédé selon une des revendications 1 à 8, **caractérisé en ce que** des tracés de parcours de bord (8a-i) successifs dans la direction périphérique sont reliés en tenant compte des caractéristiques spécifiques à la machine de travail, de préférence **en ce que** des tracés de parcours de bord (8a-i) successifs dans la direction périphérique sont reliés si la machine de travail agricole (3a, b) peut parcourir les tracés de parcours de bord reliés (8a-i), en particulier en termes de courbure, plus préférentiellement **en ce que**, dans le cas contraire, des tracés de parcours de bord successifs (8a-i) restent séparés.

10. Procédé selon une des revendications 1 à 9, **caractérisé en ce que** la limite de champ intérieur (5a, b) est décalée par endroits sensiblement parallèlement, de préférence sensiblement de la valeur de la largeur de bord minimale (12a-c), par rapport au contour de limite (6a, b).

11. Procédé selon une des revendications 1 à 10, **caractérisé en ce que** le contour de limite (6a, b) inclut au moins en partie un contour d'obstacle (16) autour d'une zone d'obstacle (17), de préférence **en ce que** la zone d'obstacle (17) est entourée par la zone de champ (2a, b), en particulier **en ce que** la zone d'obstacle (17) est entourée par la limite de champ intérieur (5a, b) .

12. Procédé selon une des revendications 1 à 11, **caractérisé en ce qu'**un tracé de parcours de bord (8a-i) est déterminé comme trace de passage de consigne (1) si le tracé de parcours de bord (8ai) s'étend sensiblement parallèlement à une trace de passage de consigne voisine (1), de préférence **en ce que**, dans le cas contraire, le tracé de parcours de bord (8a-i) est défini comme trace de tournière (18), en particulier **en ce qu'**un point d'intersection entre une trace de passage de consigne (1) et une limite de champ intérieur (4a, b) est définie, lors de la planification d'itinéraire, comme point de transition entre la trace de passage de consigne respective (1) et une trace de tournière (18).

13. Procédé selon une des revendications 1 à 12, **caractérisé en ce que** la définition des traces de passage de consigne (1) est effectuée séparément respectivement pour divers outils de travail (9a, b) de la machine de travail agricole (3a, b).
